**Europäisches Patentamt**

**European Patent Office**

**Office européen des brevets**

(19)

(11) Veröffentlichungsnummer: **0 029 580**
**B1**

(12)

# EUROPÄISCHE PATENTSCHRIFT

(45) Veröffentlichungstag der Patentschrift.
**29.08.84**

(21) Anmeldenummer: **80107185.3**

(22) Anmeldetag: **19.11.80**

(51) Int. Cl.³: **C 10 B 53/00,** C 02 F 11/10

(54) Verfahren zur Herstellung von kohlenstoffangereicherten Feststoffen und zugehörige Verwendung einer Schachtofeneinrichtung.

(30) Priorität: **25.11.79 CH 10447/79**

(43) Veröffentlichungstag der Anmeldung:
**03.06.81 Patentblatt 81/22**

(45) Bekanntmachung des Hinweises auf die Patenterteilung:
**29.08.84 Patentblatt 84/35**

(84) Benannte Vertragsstaaten:
**AT BE CH DE FR GB IT LI LU NL SE**

(56) Entgegenhaltungen:
**FR - A - 2 178 190**
**GB - A - 1 555 574**
**US - A - 3 862 887**
**US - A - 3 962 044**
**US - A - 4 111 800**

(73) Patentinhaber: **OFAG Ofenbau- und Feuerungstechnik AG, Dufourstrasse 90, CH-8034 Zürich (CH)**

(72) Erfinder: **Hug, Franz O., Dipl.-Ing. ETH, Tobelweg 4, CH-8126 Zumikon (CH)**
Erfinder: **Wiesli, Hans B., Buchackerstrasse 67, CH-8400 Winterthur (CH)**

(74) Vertreter: **Rottmann, Maximilian R., Hug Interlizenz AG Alte Zürcherstrasse 49, CH-8903 Birmensdorf/ZH (CH)**

## Beschreibung

Die Erfindung bezieht sich auf ein Verfahren zur Herstellung von kohlenstoffangereicherten Feststoffen nach dem Oberbegriff des Patentanspruchs 1. Sie bezieht sich ferner auf die Verwendung einer Schachtofeneinrichtung für diesen Zweck.

Ein Verfahren der vorgenannten Art zur Herstellung von kohlenstoffangereicherten, gegen mikrobiologische Einwirkungen beständigen Feststoffen ist bekannt aus der GB-A-1 555 574. Dort werden für die pyrolytische Behandlung Temperaturen von 350° C und mehr angewendet. Dies ergibt eine Konservierung im Sinne der Herstellung eines gegen mikrobiologische Einwirkungen beständigen Eduktes, wobei jedoch einem unerwünschten Zerfall des Eduktes durch Beigabe eines entsprechend wärmebeständigen und warmaushärtenden Bindemittels zu begegnen ist. Gleichwohl hat es sich gezeigt, daß bei Behandlungstemperaturen ab 350° C neben dem Abdestillieren von in diesem Temperaturbereich flüchtigen kohlenwasserstoffhaltigen Komponenten auch bereits stärkere thermische Zersetzungsreaktionen mit gasförmigen Reaktionsprodukten an höher kohlenstoffhaltigen Komponenten des Einsatzgutes auftreten. Hierdurch wie auch durch die Verwendung von im allgemeinen ebenfalls kohlenstoffhaltigen Bindemitteln wird Kohlenstoff-Ausbeutebilanz des Gesamtverfahrens verschlechtert.

Ferner sind aus der US-A-3 962 044 Konservierungsverfahren für vorwiegend aus hochorganischen Verbindungen wie Harnstoff bestehendes Einsatzgut bekannt, die mit Behandlungstemperaturen von 200 bis 1000° C arbeiten. Bei solchem, thermisch leicht zersetzbarem Einsatzgut treten bereits bei diesen niedrigen Temperaturen in starkem Maße Zersetzungsreaktionen mit gasförmigen Reaktionsprodukten auf. Dies hat beabsichtigtermaßen zwar eine Kohlenstoffanreicherung im Edukt — bezogen auf die Zusammensetzung des Einsatzgutes — zur Folge, aber ebenso einen hohen Anteil von gasförmig ausgetriebenen Kohlenstoffverbindungen des Einsatzgutes. Dies bedeutet wiederum eine Verschlechterung der Kohlenstoff-Ausbeutebilanz des Gesamtverfahrens.

Bei der Pyrolyse von Kommunalmüll ist es ferner aus der US-A-4 111 800 bekannt, zur Schonung der Einrichtungen und zur Verbesserung der Edukteigenschaften schadstoffneutralisierende Reagentien zuzusetzen. Von solchen, an sich bekannten Maßnahmen wird zweckmäßig auch im Zusammenhang mit der vorliegenden Erfindung Gebrauch gemacht.

Aufgabe der Erfindung ist in bezug auf den angeführten Stand der Technik die Schaffung eines Müllveredelungsverfahrens zur Erzeugung von Feststoffen mit bezüglich des Einsatzgutes erhöhtem Kohlenstoffgehalt, jedoch unter Maximierung der Feststoffausbeute und insbesondere unter Optimierung der Kohlenstoff-Ausbeutebilanz. Dazu wird erfindungsgemäß der Abbau von organischen Kohlenstoffverbindungen durch Zersetzungsentgasung bei möglichst niedrigen Behandlungstemperaturen nur so weit getrieben, als es für eine ausreichende Konservierung, d. h. die Einstellung einer gegen mikrobiologische Einwirkungen unempfindlichen Eduktbeschaffenheit, soweit eines für die Verwendung als fester Brennstoff ausreichenden Kohlenstoffgehaltes gerade erforderlich ist. Wesentliches Merkmal der Erfindungsaufgabe ist also die möglichst weitgehende Annäherung an einen optimalen Kompromiß zwischen maximaler Kohlenstoff-Ausbeutebilanz einerseits und Konservierung sowie Erhöhung des Kohlenstoffgehaltes im Edukt andererseits.

Die erfindungsgemäße Lösung dieser Aufgabe kennzeichnet sich in Verbindung mit den eingangs genannten Verfahrensmerkmalen durch die im Patentanspruch 1 angegebenen Maßnahmen. Diese Lösung beruht auf der durch umfangreiche praktische Untersuchungen gewonnenen Erkenntnis, daß durch flammenlose Pyrolyse unter Luftabschluß mit Behandlungstemperaturen unter 350° C ein ausreichend konserviertes Edukt mit hohem Kohlenstoffgehalt gewonnen werden kann, das als Festbrennstoff geeignet ist und eine hohe Kohlenstoff-Ausbeutebilanz gewährleistet. Wesentliche Bedingung hierfür ist die direkte Heizung und Spülung des Einsatzgutes im Prozeß durch einen Inertgasstrom. Hierzu hat sich die Verwendung eines direkt beheizten Schachtofens, wie sie im Patentanspruch 8 angegeben ist, als besonders vorteilhaft erwiesen.

Eingehende Untersuchungen mit dem Ziel der bevorzugten Ausbeuteoptimierung bei noch ausreichender Konservierung des Eduktes haben ferner die Einhaltung eines Temperaturbereiches bis maximal 310° C bei der pyrolytischen Behandlung im Heizgasstrom als besonders zweckmäßig erwiesen.

Weitere Merkmale und Vorteile der Erfindung werden anhand des in den Zeichnungen veranschaulichten Ausführungsbeispiels erläutert. Hierin zeigt

Fig. 1 ein Anordnungs- und Funktionsschema einer Einrichtung zur Tiefsttemperatur-Pyrolyse,

Fig. 2 ein Diagramm der Wärmetönung (endothermer bzw. exothermer Charakter der Pyrolyse) über der Behandlungstemperatur für einen verarbeiteten Kommunalmüll,

Fig. 3 ein Zeitdiagramm für Pyrolyseprozesse bei verschiedenen Behandlungstemperaturen zur Darstellung der Gewichtsabnahme des Behandlungsgutes mit fortschreitendem Prozeß,

Fig. 4 eine Analysentabelle des in einem Verfahrensbeispiel eingesetzten Rohmülls, und

Fig. 5 eine Analysentabelle des aus dem Rohmüll erhaltenen Eduktes für eine Tiefsttemperatur-Pyrolyse mit einer mittleren Behandlungstemperatur von ca. 290° C.

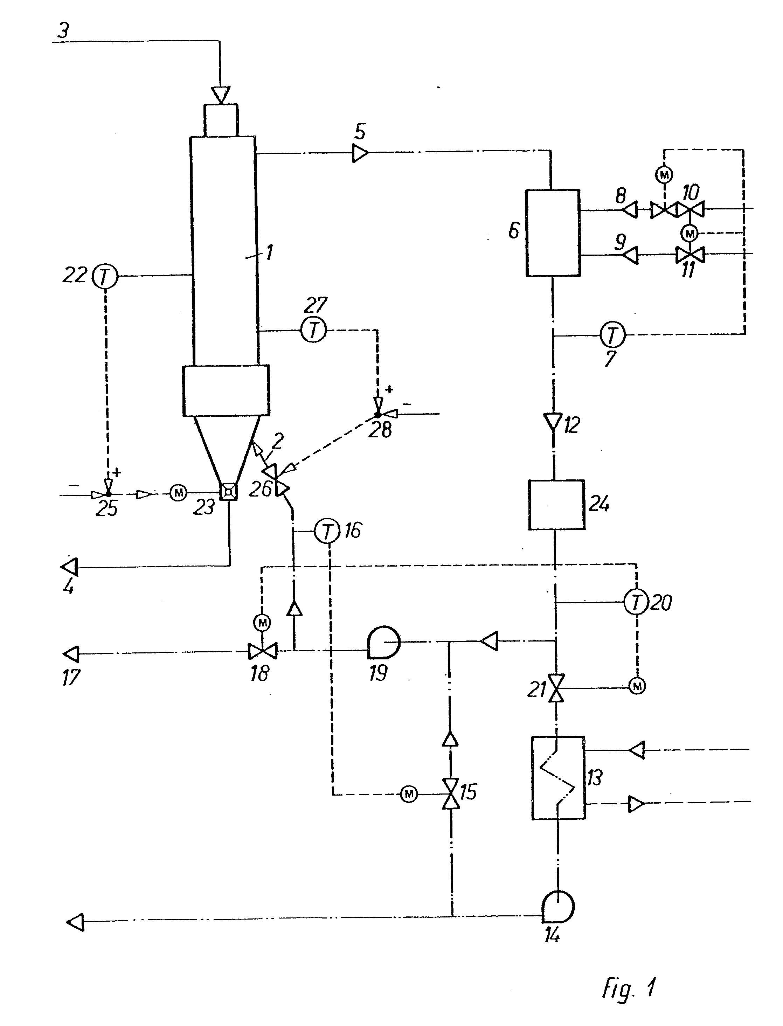

Die Anlage nach Fig. 1 umfaßt einen direkt beheizten Schachtofen 1 als Pyrolyse-Behandlungsstation mit Heiz- und Spülgaszuführung 2, Rohgutzuführung 3 und steuerbarem Eduktaustrag 4 mit zugehörigem Stellglied 23 zur Beeinflussung der Austrag- bzw. Durchlaufgeschwindigkeit. Ein Abgasauslaß 5 ist an einen externen Brenner 6 mit steuerbarer Luftzufuhr 8 sowie ebensolcher Zusatzbrennstoffzufuhr 9 für die Verfahrenseinleitung. Die zugehörigen Stellglieder sind mit 10 bzw. 11 bezeichnet, sie stehen mit einem Heizgas-Temperaturfühler 7 in Steuerverbindung. Dem Heizgasauslaß 12 des Brenners 6 ist ein Nutzwärmetauscher 13 nachgeschaltet, der auch als Kühlvorrichtung zum etwa erforderlichen Beimischen von kaltem, inertem Abgas zur Heizgasbeaufschlagung des Reaktors zwecks rascher Temperaturregelung verwendbar ist. Hierzu ist dem Abgasausgang des Wärmetauschers 13 ein Gebläse 14 mit Bypassventil 15 nachgeordnet, welch letzteres von einem Temperaturfühler 16 an der Heiz- und Spülgaszuführung im Sinne eines Regelkreises für die Einhaltung der vorgegebenen Behandlungstemperatur steuerbar ist. Der Überschuß-Gasausgang 17 mit einem Ablaßventil 18 und vorgeschaltetem Druckgebläse 19 ermöglicht in Verbindung mit einem das Ventil 18 steuernden Temperaturfühler 20 im Abgasausgang des Brenners 6 die Einhaltung vorgegebener Grenzen der dem Reaktor zuströmenden Heiz- und Spülgase. Gleichzeitig wird ein Eingangsventil 21 des Wärmetauschers 13 vom Temperaturfühler 20 im komplementären Sinne zur jeweiligen Öffnungsstellung des Ablaßventils 18 gesteuert.

Die vorgenannten Steuer- und Regeleinrichtungen wirken als Hilfsregelkreise zu einem Hauptregelkreis mit der Behandlungstemperatur als Regelgröße, die unmittelbar am Reaktor durch einen Temperaturfühler 22 erfaßt und in einem Regler 25 mit einem vorgegebenen Sollwert verglichen wird. Das hieraus resultierende Stellgrößensignal steuert im Beispielsfall das Stellglied 23 des Eduktaustrages 4, wodurch sich über die Durchsatzgeschwindigkeit eine Prozeßtemperaturregelung ergibt.

Anstelle der vorgenannten Durchsatzsteuerung als Stellglied für die Temperaturregelung oder gegebenenfalls zusätzlich zu der Durchsatzsteuerung kann eine weitere, unmittelbare Prozeßtemperaturmessung mit Fühler 27 und nachgeordnetem Regler 28 für den Sollwert-Istwertvergleich und mit einem Heizgasventil 26 als Stellglied vorgesehen werden. Hierdurch ergibt sich im allgemeinen eine besonders genaue und vergleichsweise rasche Regelung der Prozeßtemperatur.

Bei der Anlage nach Fig. 1 ist ferner die Möglichkeit einer zusätzlichen Inaktivierung oder Inertisierung des vom Brenner 6 gelieferten Heizgases mit Hilfe einer Nachbehandlungsstation 24 angedeutet. Diese kann z. B. als Nachbrenner ausgebildet und gegebenenfalls mit chemischen Behandlungsanlagen für die Bindung unerwünschter Abgaskomponenten verbunden werden.

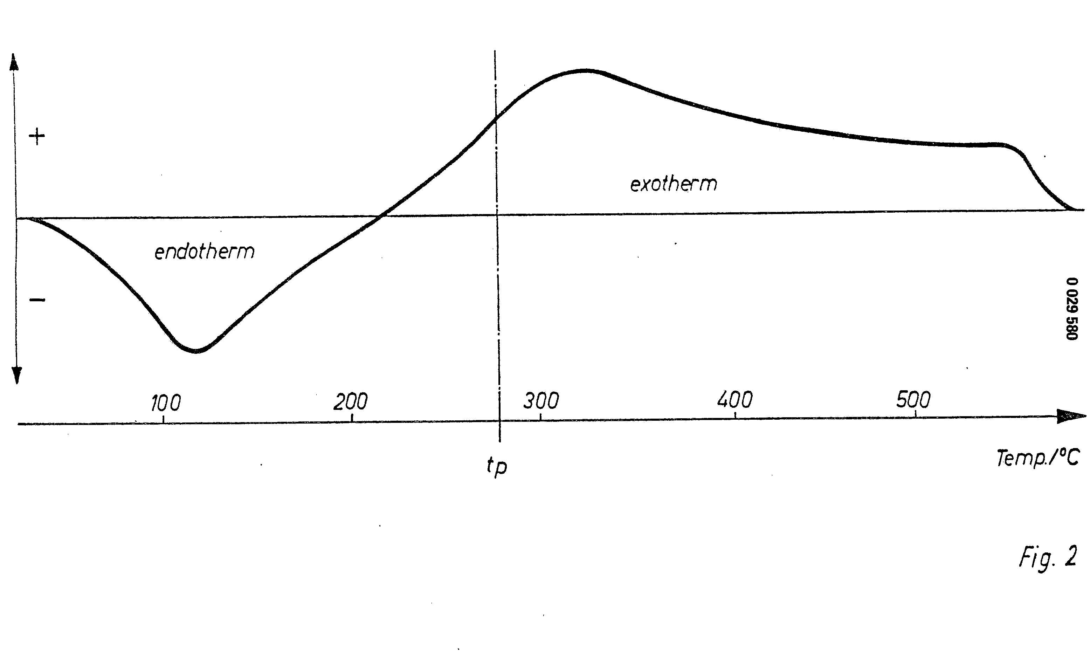

In das Wärmetönungsdiagramm nach Fig. 2 ist die Behandlungstemperatur $t_D$ von ca. 290° C als optimaler Verfahrensparameter eingetragen. Dieser Wert liegt ersichtlich im Anfangsbereich des Gebietes der exothermen Müllzersetzungsreaktionen. Diese führen erfahrungsgemäß nicht nur zu einem vergleichsweise raschen Ablauf der Zersetzungsreaktionen bei vermindertem Bedarf an zusätzlich zugeführter Prozeßwärme, sondern liefern auch die erstrebte Konservierung und Kohlenstoffanreicherung des Eduktes. Die Begrenzung des Prozeßtemperaturbereiches nach oben hin sorgt dabei für eine weitgehende Optimierung der Mengenausbeute des Eduktes.

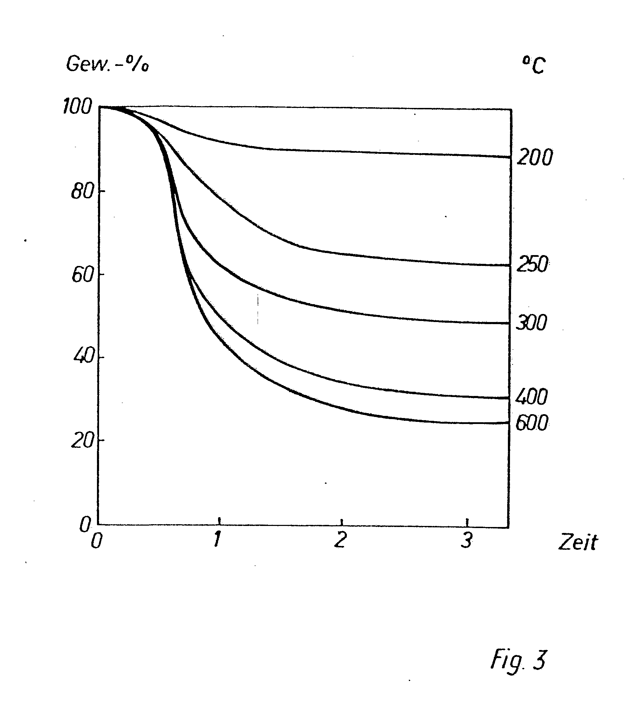

Das Zeit-Temperaturdiagramm nach Fig. 3 läßt erkennen, daß der Prozeßtemperaturbereich um 300° C eine vergleichsweise rasche Gewichtsabnahme des Einsatzgutes ergibt, die dem Ablauf der Entgasungsreaktionen für die erstrebte Konservierung und Kohlenstoffanreicherung des Eduktes entspricht, jedoch bei etwa 50% ihren Abschluß findet. Letzteres entspricht der Mengenoptimierung der Eduktausbeute.

Die ohne ins einzelne gehende Erläuterung verständlichen Einsatz- bzw. Eduktdaten zeigen durch Vergleich insbesondere die Zunahme des Fix-Kohlenstoffgehaltes im Edukt, was der erstrebten Konservierung entspricht, sowie des gewichtsbezogenen Heizwertes, die ein Maß für die Qualität des Eduktes im Hinblick auf die Verwendung als fester Brennstoff darstellt.

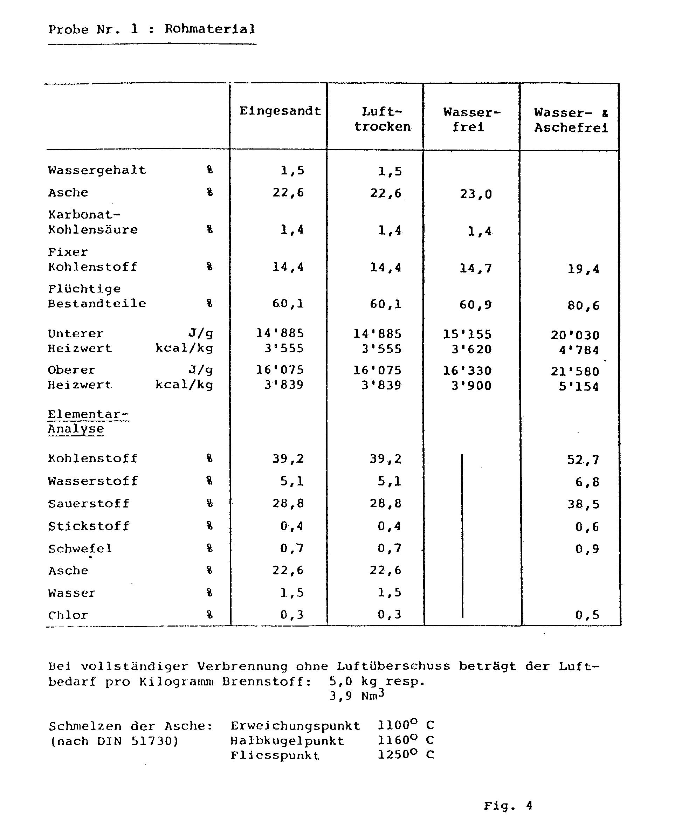

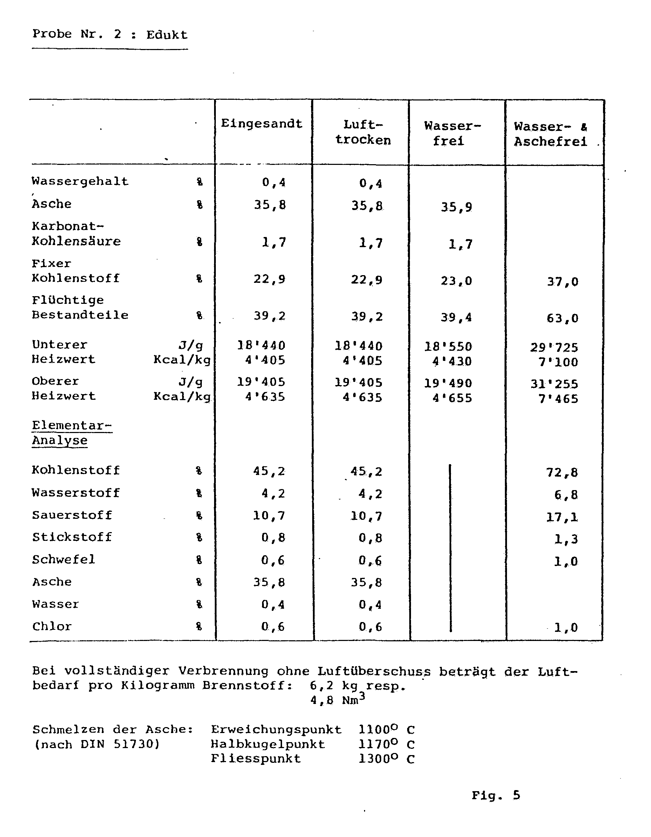

Die Analysendaten der Proben nach den Tabellen in Fig. 4 und 5 wurden mit einer Verfahrenstemperatur von im Mittel ca. 290° C erhalten. Das Edukt hatte eine torfähnliche, trockene und nach durchgeführter Lagerung unveränderte Beschaffenheit, die z. B. die Anforderungen an einen Haushalts- oder Industriebrennstoff erfüllt.

Für den Fall, daß die Beschaffenheit des eingesetzten Mülls eine Verwendung als Haushalts- oder Industriebrennstoff ohne besondere Vorkehrungen gegen Schadstoffimmissionen bei der Verfeuerung nicht zuläßt, kann eine chemische Vorbehandlung des eingesetzten Mülls zur Bindung der entsprechenden Komponenten angewendet werden. Diese Bindungsreaktionen können unter Berücksichtigung der reaktionsfördernden Bedingungen, insbesondere der Temperatur, beim Pyrolyseprozeß besonders intensiv ablaufen. Unter Umständen entstehen die bei der anschließenden Verbrennung schadstoffbildenden Komponenten erst im Verlauf der Pyrolyse, so daß durch entsprechende, neutralisierende Zusätze bereits auf die Bildungsreaktionen der schadstofferzeugenden Komponenten eingewirkt werden kann.

Im allgemeinen haben die hinsichtlich nachfolgender Verbrennung schadstoffbildenden Komponenten des Pyrolyseedukts sauren Charakter. Dies gilt insbesondere für die chlorhaltigen der meist anzutreffenden Kunststoffbestandteile des Kommunalmülls. Zur Neutralisierung kann mit Vorteil Calciumoxid oder Calciumhydroxid für die Pyrolyse zugesetzt werden, und zwar zweckmäßig durch Beimischung zum eingesetzten Müll. Im allgemeinen ist eine Überdosierung des alkalischen Neutralisierungsmittels von 50 bis 100% über die dem stöchiometrischen Gleichgewicht der Bindungsreaktion entsprechende Menge hinaus zweckmäßig. Grundsätzlich kommen für die Neutralisierung saurer Schadstoffe auch andere alkalische Reagentien in Betracht, jedoch hat Kalk den Vorteil der im allgemeinen geringen Toxizität der entstehenden Endverbindungen, außerdem denjenigen der Billigkeit.

Eine Neutralisierung der vorgenannten Art kann im übrigen unabhängig von der Schadstoffbildung und -immission bei der Verbrennung schon im Hinblick auf die Schonung der Feuerungsanlagen gegen aggressive Komponenten, insbesondere gegen Metall angreifende, saure Komponenten, angezeigt sein.

**Patentansprüche**

1. Verfahren zur Herstellung von kohlenstoffangereicherten, gegen mikrobiologische Einwirkung beständigen Feststoffen aus organische Kohlenstoffverbindungen enthaltenden Abfällen als Einsatzgut, insbesondere aus Zellulose oder zelluloseähnliche Verbindungen enthaltendem Kommunalmüll, bei dem das Einsatzgut einer pyrolytischen Behandlung durch flammenlose Beaufschlagung mit sauerstofffreiem Heizgas unter Luftabschluß mit Entgasung unterzogen wird, dadurch gekennzeichnet, daß das Einsatzgut bei der pyrolytischen Behandlung im Heizgasstrom in einem Temperaturbereich zwischen 265° C und weniger als 350° C gehalten wird.

2. Verfahren nach Anspruch 1, dadurch gekennzeichnet, daß die pyrolytische Behandlung im Heizgasstrom in einem Temperaturbereich bis maximal 310° C durchgeführt wird.

3. Verfahren nach Anspruch 1 oder 2, dadurch gekennzeichnet, daß das Heizgas für die direkte Beaufschlagung des Einsatzgutes wenigstens teilweise durch Verbrennung der Abgase aus der pyrolytischen Behandlung erzeugt wird.

4. Verfahren nach einem der Ansprüche 1 bis 3, dadurch gekennzeichnet, daß für die Durchführung der pyrolytischen Behandlung wenigstens ein schadstoffneutralisierendes Reagens zugesetzt wird.

5. Verfahren nach Anspruch 4, dadurch gekennzeichnet, daß das schadstoffneutralisierende Reagens dem Einsatzgut beigemischt wird.

6. Verfahren nach Anspruch 4 oder 5, dadurch gekennzeichnet, daß das schadstoffneutralisierende Reagens in bezug auf das stöchiometrische Gleichgewicht der betreffenden Bindungsreaktion um 50 bis 100% überdosiert wird.

7. Verfahren nach einem der Ansprüche 4 bis 6, dadurch gekennzeichnet, daß als saure Schadstoffe neutralisierendes Reagens Calciumoxid oder Calciumhydroxid verwendet wird.

8. Verwendung einer Einrichtung mit einem direkt beheizten Schachtofen als pyrolytische Behandlungsstation (1) zur Durchführung des Verfahrens nach einem der Ansprüche 1 bis 7.

9. Verwendung einer Einrichtung nach Anspruch 8, mit einer Temperaturregelung für die pyrolytische Behandlungsstation (1) als Regelstrecke, umfassend mindestens ein Meßglied (22, 27) für die Erfassung der maximal auftretenden Behandlungstemperatur als Regelgröße sowie mindestens ein auf die Behandlungsgut-Durchsatzgeschwindigkeit und/oder auf die Heizung der pyrolytischen Behandlungsstation (1) einwirkendes Stellglied (23 bzw. 26).

10. Verwendung nach Anspruch 9 zur Durchführung des Verfahrens nach Anspruch 3, umfassend einen die pyrolytische Behandlungsstation (1) enthaltenden Heiz- bzw. Heiz- und Spülgaskreislauf, der eine außerhalb der Behandlungsstation (1) angeordnete und mit Abgas aus der Behandlungsstation (1) gespeiste Verbrennungsstation (6) mit Verbrennungsluft- oder -sauerstoffzufuhr (8) sowie mit nachgeordneter, steuerbarer Abzweigstation (18, 21) für überschüssiges Verbrennungsgas aufweist.

11. Verwendung nach Anspruch 10, mit mindestens einer der Verbrennungsgas-Abzweigstation (18, 21) zugeordneten Nutz-Wärmetauscheinrichtung (13).

12. Verwendung nach Anspruch 10 oder 11, mit mindestens einer der Verbrennungsstation (6) nachgeordneten, zusätzlichen Inertisierungseinrichtung (24) für das Verbrennungsgas.

13. Verwendung nach einem der Ansprüche 8 bis 12, mit mindestens einer zwischen der Abgas-Verbrennungsstation (6) und der Heiz- bzw. Heiz- und Spülgaszuführung (2) der pyrolytischen Behandlungsstation (1) angeordneten, steuerbaren Kühleinrichtung (13).

14. Verwendung nach einem der Ansprüche 8 bis 13, mit mindestens einer der Heiz- bzw. Heiz- und Spülgaszuführung (2) der pyrolytischen Behandlungsstation (1) vorgeordneten, steuerbaren Kühlgas-Zumischeinrichtung (15, 16).

15. Verwendung nach einem der Ansprüche 10 bis 14, bei der die Steuerung der Verbrennungsgas-Abzweigstation (18, 21), der Nutz-Wärmetauscheinrichtung bzw. Kühleinrichtung (13) und/oder der Kühlgas-Zumischeinrichtung (15, 16) als Stellglied mit der Temperaturregelung der pyrolytischen Behandlungsstation (1) gekoppelt ist.

**Claims**

1. Process for manufacturing carbon-enriched solids resistant to biological attack, from waste which contains organic carbon compounds as starting material, especially from town waste containing cellulose or cellulose-like compounds, in which the starting material undergoes a pyrolitic treatment by flame-free blowing with oxygen free heating gas so that it de-gasses, air being excluded, characterized in that the starting material is maintained during the pyrolitic treatment in a fuel gas stream in a temperature range between 265° C and less than 350° C.

2. Process according to claim 1, characterized in that the pyrolitic treatment is carried out in a heating gas stream in a temperature range up to a maximum of 310° C.

3. Process according to claim 1 or claim 2, characterised in that the heating gas for the direct blowing of the starting material is produced at least in part by burning the gas released from the pyrolitic treatment.

4. Process according to any of claims 1 to 3, characterised in that at least one reagent for neutralising harmful substances is added for carrying out the pyrolitic treatment.

5. Process according to claim 4, characterised in that the neutralising reagent is mixed with the starting material.

6. Process according to claim 4 or claim 5, characterised in that the neutralising reagent is supplied in an excess from 50 to 100% in relation to the stoichiometric equilibrium of the reaction concerned.

7. Process according to any of claims 4 to 6, characterised in that calcium oxide or calcium hydroxide is used as a neutraliser for acid substances.

8. The use of apparatus with a directly heated shaft oven as the pyrolitic treatment stage (1) for carrying out the process according to any of claims 1 to 7.

9. The use of apparatus according to claim 8, with a temperature control for the pyrolitic treatment device (1) formed as a control assembly including at least one measuring member (22, 27) for determining the maximum treatment temperature as a control quantity and at least one adjustment member acting on the treatment material throughput rate and/or on the heating of the pyrolitic treatment stage (1).

10. The use according to claim 9 for carrying out the process according to claim 3, including a heating or heating and washing gas circuit comprising the pyrolitic treatment stage (1), which has a combustion stage (6) arranged externally of the treatment stage (1) and supplied with exhaust from the treatment stage (1) having a combustion air or oxygen supply (8) and having a subsequent, controllable diverter stage (18, 21) for surplus combustion gas.

11. The use according to claim 10, with at least one heat exchanger (13) connected to the combustion gas diverter stage (18, 21).

12. The use according to claim 10 or claim 11, with at least one additional device (24) for rendering the combustion gas inert connected to the combustion stage (6).

13. The use according to any of claims 8 to 12, with at least one controllable cooling device (13) arranged between the exhaust gas combustion stage (6) and the heating or heating and washing gas supply to the pyrolitic treatment zone (1).

14. The use according to any of claims 8 to 13, with at least one controllable cooling gas mixer device (15, 16) arranged before the heating or heating and washing gas device (2) of the pyrolitic treatment stage (1).

15. The use according to any of claims 10 to 14, in which the control for the combustion gas diverter stage (18, 21), the heat exchanger or cooling device (13) and/or the cooling gas mixing device (15, 16) is coupled as an adjustment member with the temperature control of the pyrolitic treatment stage (1).

**Revendications**

1. Procédé de préparation de produits solides enrichis en carbone, résistant aux actions microbiologiques, au départ de déchets contenant des matières organiques carbonées, en particulier au départ d'ordures ménagères contenant de la cellulose ou des composés voisins, dans lequel on soumet le produit de départ à un traitement de pyrolyse par réaction sans flammes avec un gaz de chauffage exempt d'oxygène à l'abri de l'air avec dégazage, caractérisé par le fait que le produit de départ est maintenu pendant le traitement de pyrolyse dans le courant de gaz de chauffage dans un domaine de températures entre 265 et moins de 350° C.

2. Procédé selon la revendication 1, caractérisé par le fait que le traitement de pyrolyse dans le courant de gaz de chauffage est effectué dans un domaine de températures allant jusqu'à 310° C au maximum.

3. Procédé selon la revendication 1 ou 2, caractérisé par le fait que le gaz de chauffage pour la réaction directe du produit de départ est au moins partiellement obtenu par brûlage des gaz provenant du traitement de pyrolyse.

4. Procédé selon l'une quelconque des revendications 1 à 3, caractérisé par le fait que pour effectuer le traitement de pyrolyse, on ajoute au moins un réactif de neutralisation de produits nuisibles.

5. Procédé selon la revendication 4, caractérisé par le fait que le réactif de neutralisation de produits nuisibles est mélangé avec le produit de départ.

6. Procédé selon la revendication 4 ou 5, caractérisé par le fait que le réactif de neutralisation de produits nuisibles est ajouté en excès de 50 à 100% en poids par rapport à la stoechiométrie de la réaction concernée.

7. Procédé selon l'une quelconque des revendications 4 à 6, caractérisé par le fait que l'on utilise comme réactif de neutralisation des matériaux nuisibles acides l'oxyde de calcium ou l'hydroxyde de calcium.

8. Utilisation d'une installation comprenant en tant que station (1) de traitement de pyrolyse un four à cuve à chauffage direct pour la mise en oeuvre du procédé selon l'une quelconque des revendications 1 à 7.

9. Utilisation d'une installation selon la revendication 8, avec, en tant que système commandé, un réglage de température pour la station (1) de traitement de pyrolyse, comprenant au moins un organe de mesure (22, 27) pour la détection de la température de traitement maximale comme grandeur de réglage, ainsi qu'au moins un organe de réglage (23, respectivement

26) agissant sur le débit du produit de traitement et/ou sur le chauffage de la station (1) de traitement de pyrolyse.

10. Utilisation selon la revendication 9, pour mettre en oeuvre le procédé selon la revendication 3, comprenant une circulation, incluant la station (1) de traitement de pyrolyse, pour le gaz de chauffage, respectivement pour le gaz de chauffage et d'entraînement, qui possède une station (6) de brûlage disposée à l'extérieur de la station (1) de traitement et alimentée en gaz d'évacuation de la station (1) de traitement avec une arrivée (8) d'oxygène ou d'air pour le brûlage, ainsi qu'une station de dérivation (18, 21) réglable située en aval pour le gaz de brûlage en excès.

11. Utilisation selon la revendication 10, avec au moins un dispositif (13) échangeur de chaleur associé à la station de dérivation (18, 21) des gaz de brûlage.

12. Utilisation selon la revendication 10 ou 11, avec en outre au moins une installation (24) située en aval de la station (6) de brûlage, et destinée à rendre inerte le gaz de brûlage.

13. Utilisation selon l'une quelconque des revendications 8 à 12, avec au moins une installation (13) de refroidissement réglable entre la station (6) de brûlage des gaz d'évacuation et l'amenée (2) du gaz de chauffage, respectivement du gaz de chauffage et d'entraînement à la station (1) de traitement de pyrolyse.

14. Utilisation selon l'un quelconque des revendications 8 à 13, avec au moins une installation (15, 16) de mélange de gaz de refroidissement réglable disposée avant l'amenée (2) du gaz de chauffage, respectivement du gaz de chauffage et d'entraînement à la station (1) de traitement de pyrolyse.

15. Utilisation selon l'une quelconque des revendications 10 à 14, dans laquella la commande de la station de dérivation (18, 21) du gaz de brûlage, de l'installation d'échange de chaleur, respectivement de l'installation de refroidissement (13), et/ou de l'installation (15, 16) de mélange de gaz de refroidissement est couplée en tant qu'élément de réglage avec le réglage de température de la station (1) de traitement de pyrolyse.

Fig. 1

endotherm

exotherm

+

−

6

0 029 580

100    200    300    400    500

tp

Temp./°C

Fig. 2

Fig. 3

Probe Nr. 1 : Rohmaterial

|  | | Eingesandt | Luft-trocken | Wasser-frei | Wasser- & Aschefrei |
|---|---|---|---|---|---|
| Wassergehalt | % | 1,5 | 1,5 | | |
| Asche | % | 22,6 | 22,6 | 23,0 | |
| Karbonat-Kohlensäure | % | 1,4 | 1,4 | 1,4 | |
| Fixer Kohlenstoff | % | 14,4 | 14,4 | 14,7 | 19,4 |
| Flüchtige Bestandteile | % | 60,1 | 60,1 | 60,9 | 80,6 |
| Unterer Heizwert | J/g | 14'885 | 14'885 | 15'155 | 20'030 |
| | kcal/kg | 3'555 | 3'555 | 3'620 | 4'784 |
| Oberer Heizwert | J/g | 16'075 | 16'075 | 16'330 | 21'580 |
| | kcal/kg | 3'839 | 3'839 | 3'900 | 5'154 |
| Elementar-Analyse | | | | | |
| Kohlenstoff | % | 39,2 | 39,2 | | 52,7 |
| Wasserstoff | % | 5,1 | 5,1 | | 6,8 |
| Sauerstoff | % | 28,8 | 28,8 | | 38,5 |
| Stickstoff | % | 0,4 | 0,4 | | 0,6 |
| Schwefel | % | 0,7 | 0,7 | | 0,9 |
| Asche | % | 22,6 | 22,6 | | |
| Wasser | % | 1,5 | 1,5 | | |
| Chlor | % | 0,3 | 0,3 | | 0,5 |

Bei vollständiger Verbrennung ohne Luftüberschuss beträgt der Luftbedarf pro Kilogramm Brennstoff: 5,0 kg resp.
3,9 $Nm^3$

Schmelzen der Asche:   Erweichungspunkt   1100° C
(nach DIN 51730)        Halbkugelpunkt      1160° C
                        Fliesspunkt         1250° C

Fig. 4

13

Probe Nr. 2 : Edukt

| | | Eingesandt | Luft-trocken | Wasser-frei | Wasser- & Aschefrei |
|---|---|---|---|---|---|
| Wassergehalt | % | 0,4 | 0,4 | | |
| Asche | % | 35,8 | 35,8 | 35,9 | |
| Karbonat-Kohlensäure | % | 1,7 | 1,7 | 1,7 | |
| Fixer Kohlenstoff | % | 22,9 | 22,9 | 23,0 | 37,0 |
| Flüchtige Bestandteile | % | 39,2 | 39,2 | 39,4 | 63,0 |
| Unterer Heizwert | J/g Kcal/kg | 18'440 4'405 | 18'440 4'405 | 18'550 4'430 | 29'725 7'100 |
| Oberer Heizwert | J/g Kcal/kg | 19'405 4'635 | 19'405 4'635 | 19'490 4'655 | 31'255 7'465 |
| Elementar-Analyse | | | | | |
| Kohlenstoff | % | 45,2 | 45,2 | | 72,8 |
| Wasserstoff | % | 4,2 | 4,2 | | 6,8 |
| Sauerstoff | % | 10,7 | 10,7 | | 17,1 |
| Stickstoff | % | 0,8 | 0,8 | | 1,3 |
| Schwefel | % | 0,6 | 0,6 | | 1,0 |
| Asche | % | 35,8 | 35,8 | | |
| Wasser | % | 0,4 | 0,4 | | |
| Chlor | % | 0,6 | 0,6 | | 1,0 |

Bei vollständiger Verbrennung ohne Luftüberschuss beträgt der Luftbedarf pro Kilogramm Brennstoff: 6,2 kg resp.
4,8 $Nm^3$

Schmelzen der Asche:  Erweichungspunkt  1100° C
(nach DIN 51730)   Halbkugelpunkt   1170° C
          Fliesspunkt     1300° C

Fig. 5